# FASCICULE DE BREVET EUROPEEN

(11) **EP 3 144 881 B1**
(45) Date de publication et mention de la délivrance du brevet: **15.08.2018**
(21) Numéro de dépôt: 16197081.9
(22) Date de dépôt: 20.11.2013
(51) Int. Cl.: G06T 3/00, G06T 3/40, G06T 7/00, H04N 5/232, H04N 5/341, H04N 13/00, G06T 7/38, G06T 7/579, G06T 7/593

(54) **PROCEDE DE MOSAIQUAGE 3D PANORAMIQUE D'UNE SCENE**
VERFAHREN ZUR 3D-PANORAMA-MOSAIKBILDUNG EINER SZENE
METHOD CREATING A 3-D PANORAMIC MOSAIC OF A SCENE

(30) Priorité: 21.11.2012 FR 1203126
(43) Date de publication de la demande: 22.03.2017
(62) Demande divisionnaire de: 13792927.9
(73) Titulaire: Thales, 92400 Courbevoie (FR)
(72) Inventeur: HORAK, Raphaël, 78995 ELANCOURT (FR)
(74) Mandataire: Henriot, Marie-Pierre

(56) Documents cités:
- US-A1- 2003 071 194
- HANSON A R ET AL: "Generalized parallel-perspective stereo mosaics from airborne video", PATTERN ANALYSIS AND MACHINE INTELLIGENCE, IEEE TRANSACTIONS ON, IEEE SERVICE CENTER, LOS ALAMITOS, CA, US, vol. 26, no. 2, 1 février 2004 (2004-02-01), pages 226-237, XP011105998, ISSN: 0162-8828, DOI: 10.1109/TPAMI.2004.1262190
- POLLEFEYS M ET AL: "Detailed Real-Time Urban 3D Reconstruction from Video", INTERNATIONAL JOURNAL OF COMPUTER VISION, KLUWER ACADEMIC PUBLISHERS, BO, vol. 78, no. 2-3, 20 octobre 2007 (2007-10-20), pages 143-167, XP019581883, ISSN: 1573-1405
- AKIHIKO TORII ET AL: "From Google Street View to 3D city models", 2009 IEEE 12TH INTERNATIONAL CONFERENCE ON COMPUTER VISION WORKSHOPS, ICCV WORKSHOPS : KYOTO, JAPAN, 27 SEPTEMBER - 4 OCTOBER 2009, INSTITUTE OF ELECTRICAL AND ELECTRONICS ENGINEERS, PISCATAWAY, NJ, 27 septembre 2009 (2009-09-27), pages 2188-2195, XP031664581, ISBN: 978-1-4244-4442-7

## Description

Le domaine de l'invention est celui de la reconstruction 3D d'une scène à partir d'images panoramiques successives de cette scène, suivi du mosaïquage 3D de cette scène.

La reconstruction 3D d'une scène consiste à obtenir, à partir d'images 2D successives de cette scène prises suivant des points de vue différents, une image reconstruite dite 3D telle qu'à chaque pixel de l'image reconstruite, c'est-à-dire en tout point où la reconstruction déclare qu'il y a un élément de scène, sont associées les coordonnées du point de la scène correspondant, définies dans un repère X, Y, Z lié à cette scène.

Le mosaïquage classique dit mosaïquage 2D consiste à partir d'images successives d'une scène à projeter successivement celles-ci sur un plan principal de la scène et les assembler pour en faire une mosaïque.

Les techniques de reconstruction 3D passive de scène à partir de caméras sont décrites dans différents ouvrages de référence :
- R. Horaud & O. Monga. Vision par Ordinateur : Outils Fondamentaux, Editions Hermès, 1995. http://www.inrialpes.fr/movi/people/Horaud/livre-hermes.html
- Olivier Faugeras . Three-Dimensional Computer Vision, MIT Press, 1993
- Frédéric Devernay, INRIA Grenoble, cours "Vision par ordinateur 3-D". http://devernay.free.fr/cours/vision/
- Tébourbi Riadh, SUP'COM 2005 IMAGERIE 3D 08/10/2007
- « Learning OpenCV: Computer Vision with the OpenCV Library", Gary Bradsky, 2008

Ces ouvrages citent tous des techniques de reconstruction 3D de scène à partir de couples d'images stéréoscopiques provenant de caméras positionnées à des points de vue différents, qui peuvent être soit des caméras fixes positionnées à différents endroits de l'espace, soit une caméra dont la position varie temporellement, avec toujours le même principe de base de mise en correspondance des images des caméras prises 2 à 2 pour former une reconstruction 3D stéréoscopique de la portion d'espace visualisée par les caméras.

Ils expliquent aussi le principe de rectification épipolaire où l'image plan focal de chaque caméra est rectifiée conformément à l'attitude de la caméra sur un plan dit de rectification pour faciliter la mise en correspondance entre les images du couple stéréoscopique et rendre possible la reconstruction 3D. Le procédé est relativement optimisé par différents auteurs mais repose toujours sur le principe qu'il faut d'abord corriger les distorsions optiques de la caméra et ensuite utiliser les attitudes relatives des 2 caméras pour déterminer le plan de rectification à partir duquel se fait la mise en correspondance et la reconstruction 3D.

D'autres techniques de reconstruction 3D passive existent dans la littérature, par exemple les techniques dites de silhouettage, non considérées ici car elles s'appliquent à des cas particuliers et demandent des connaissances préalables sur la scène.

Dans les techniques de reconstruction active d'une scène on peut citer celles à base de lidar qui permettent de reconstruire directement par un calcul de distance le maillage 3D de la scène.

On peut citer parmi les ouvrages de référence :
- Travaux MATIS pour l'IGN: "Using Full Waveform Lidar Data for Mapping of urban Areas", Thèse de Doctorat, Clément Mallet, 2010
- « Couplage de Données Laser Aéroporté et Photogrammétriques pour l'Analyse de Scènes Tridimensionnelles », Thèse de doctorat, Frédéric Bretar, 2006.

Un article intéressant montre que ces techniques ont des limites pour reconstituer des objets 3D de forme complexe (par exemple concave) : Structuration plane d'un nuage de points 3D non structuré et détection des zones d'obstacles, Vision interface conference, 1999, Nicolas Loémie, Laurent Gallo,Nicole Cambou,Georges Stamon.

Concernant le mosaïquage, on peut citer les ouvrages de référence suivants :
- L.G. Brown, « A Survey of Image Registration Techniques », dans ACM Computing Surveys, vol. 24, n° 4, 1992,
- « Mosaïque d'images multirésolution et applications », Thèse de doctorat, Université de Lyon. Lionel Robinault, 2009,
- HANSON A R ET AL: «Generalized parallel-perspective stereo mosaics from airborne video»,PATTERN ANALYSIS AND MACHINE INTELLIGENCE, IEEE TRANSACTIONS ON, IEEE SERVICE CENTER, LOS ALAMITOS, CA, US, vol. 26, no. 2, 1 février 2004 (2004-02-01), pages 226-237, ISSN: 0162-8828, DOI: 10.1 109/TPAMI.2004.1262190,
- POLLEFEYS M ET AL: «Detailed Real-Time Urban 3D Reconstruction from Video»,INTERNATIONAL JOURNAL OF COMPUTER VISION, KLUWER ACADEMIC PUBLISHERS, BO, vol. 78, no. 2-3, 20 octobre 2007 (2007-10-20), pages 143-167, ISSN: 1573-1405.

Si l'on résume l'art antérieur concernant la reconstruction 3D, on peut dire que la reconstruction 3D peut être partiellement obtenue en utilisant :
- Des couples de caméras réalisant une image spatialement stéréoscopique de la scène et en fusionnant ces images pour réaliser une reconstruction 3D et éventuellement un mosaïquage de la scène. Cette solution présente plusieurs inconvénients :
   ∘ les caméras sont difficiles à calibrer (problèmes de vibration),
   ∘ une imprécision en restitution de la reconstruction 3D du fait d'une base stéréo limitée par l'espacement entre les caméras,
   ∘ une restitution faible champ et faible étendue du fait du champ optique limité des caméras.

D'autre part la reconstruction 3D finalisée n'est pas évidente, car elle est constituée par l'assemblage de reconstructions 3D locales (résultant du procédé de restitution stéréoscopique de 2 images souvent petit champ) qui peuvent être très bruitées du fait du nombre limité d'images qui ont permis de la constituer, du champ limité des caméras et du fait que les plans de reconstruction dépendant des attitudes respectives des caméras ont une géométrie difficile à mesurer avec précision (la position et géométrie relatives des caméras servant à faire la reconstruction 3D est souvent imprécise dans la pratique du fait qu'il s'agit de caméras qui sont éloignées de 1 ou 2 mètres les unes des autres et susceptibles de vibrer l'une par rapport à l'autre : c'est encore plus flagrant quand ces caméras sont motorisées). La façon précise d'assembler les reconstructions 3D intermédiaires n'est jamais décrite dans le détail et dans la pratique on constate beaucoup d'erreurs dans la reconstruction 3D finalisée qui reste de toute façon faible en étendue spatiale et angulaire (typiquement inférieure à 200m x 200m en étendue spatiale avec une étendue angulaire typiquement inférieure à 30°).

Enfin le procédé de rectification et de mise en correspondance lui-même, dépendant des attitudes des caméras et passant par une étape préliminaire de dérotation du plan focal dans le processus de rectification, fait qu'il existe des cas de figures où la reconstruction 3D présente des trous, surtout si le système présente des mouvements temporels de rotation.

En dernier lieu le système stéréoscopique restitue mal des plans qui sont presque perpendiculaires à l'une des 2 caméras (c'est le problème de la restitution des toits inclinés en imagerie stéréoscopique aérienne ou satellitaire).
- Une caméra à faible ou moyen champ se déplaçant, mais la reconstruction 3D est limitée par le parcours et l'orientation de la caméra et n'est donc pas omnidirectionnelle ; de plus la reconstruction peut présenter des trous du fait de mouvements non contrôlés de la caméra ou des non recouvrements de celle-ci au cours de son mouvement. Les algorithmes utilisés pour la reconstruction 3D imposent une reconstruction dans un repère lié ou proche du plan focal de la caméra ce qui limite les possibilités de reconstruction (un seul plan principal de reconstruction et reconstruction très limitée quand la caméra change d'orientation). Le résultat de la reconstruction est aussi très bruité et peut présenter de nombreuses erreurs du fait du faible recouvrement entre images, d'un plan de reconstruction constant de la scène reconstruite (et d'une caméra pouvant s'écarter de ce plan) et de l'utilisation d'algorithmes n'exploitant pour la reconstruction 3D que deux images séparées d'une distance relativement faible. Le mosaïquage obtenu par le plaquage au sol des images successives ne fonctionne pas et n'est pas conforme quand la scène n'est pas plate et/ou comporte des éléments 3D.
- Des capteurs actifs c'est-à-dire avec télémétrie, mais là encore la reconstruction 3D n'est pas omnidirectionnelle et n'est pas nécessairement segmentée, les mesures étant obtenues sous forme de nuages de points difficilement exploitables de manière automatique. De plus le maillage obtenu par ces capteurs actifs présente l'inconvénient d'être non dense angulairement (typiquement moins de 4 points au m² pour les applications aéroportées à 1km de hauteur). La technique n'est pas adaptée pour l'instant pour pouvoir produire une image texturée de la scène et doit être presque toujours corrigée manuellement.

Toutes les solutions précédentes sont inadaptées pour obtenir un mosaïquage 3D ou une reconstruction 3D pour une scène 3D de grande dimension, c'est-à-dire supérieure à 500m x 500m. Les mosaïques instantanées 3D obtenues présentent des déformations et sont limitées en étendue angulaire (typiquement <30°) ou spatiale. L'assemblage des mosaïques est complexe quand le terrain est 3D et le résultat final n'est pas conforme à la géométrie de la scène.

Les inconvénients des méthodes de l'état de l'art ne sont pas limitatifs, d'autres inconvénients sont décrits dans le brevet.

Le but de l'invention est de pallier ces inconvénients.

La solution proposée est basée sur l'utilisation d'un système panoramique couvrant un très grand secteur angulaire de la scène et pouvant aller si on le désire jusqu'à couvrir la sphère complète, et sur l'exploitation du déplacement de celui-ci dans la scène avec un traitement des images 2D obtenues, pour reconstruire les informations 3D de la scène dans l'intégralité de ce qui a été vu par le système panoramique et suivant différents plans de reconstruction.

Le système panoramique comporte un ou plusieurs capteurs dont les images ne présentent pas forcément de recouvrement entre elles, et permet de recouvrir l'ensemble de la scène à reconstruire instantanément (avec des trous si les capteurs ne sont pas recouvrants) ou au cours du mouvement.

Cette solution permet également de produire en parallèle une mosaïque à très grande étendue spatiale et angulaire représentant cette scène suivant tous les points de vue du système panoramique au cours de son déplacement.

L'invention a pour objet un procédé de mosaïquage d'une scène, tel que revendiqué.

On réalise ainsi un mosaïquage 3D qui est une généralisation du mosaïquage 2D dans le sens où la projection peut se faire sur une surface 3D quelconque, elle-même pouvant être constituée de plusieurs surfaces planes ou non présentant des discontinuités. Ce mosaïquage 3D consiste à partir d'images 2D successives d'une scène (prises suivant des points de vue différents) et de la reconstruction 3D de la scène au sens précédent, à projeter et assembler les différentes images 2D sur la modélisation géométrique de la reconstruction 3D, permettant ainsi de restituer l'ensemble de la scène sous forme d'une mosaïque texturée plaquée sur les différents éléments 3D de cette scène. Il permet de restituer de manière conforme un assemblage d'images sur une scène quelconque présentant du relief ou des éléments 3D. La mosaïque 3D reconstituée est donc une reconstruction 3D texturée de la scène.

Ces procédés permettent de réaliser un mosaïquage 3D sur une étendue spatiale et angulaire la plus large possible.

L'invention concerne également un équipement de mosaïquage 3D d'une scène, qui comprend :
- un système panoramique apte à former des images 2D de la scène, dites images panoramiques 2D, muni de moyens de localisation et,
- relié à ce système panoramique, un calculateur comportant :
   ∘ des moyens de mise en oeuvre du procédé de mosaïquage tel que défini précédemment,
   ∘ des moyens de traitement automatiques d'images complémentaires éventuellement associés à une interface homme-machine ou remplacés par elle.

On obtient ainsi un procédé simple, précis permettant par exemple de produire des cartes texturées sur lesquelles des mesures peuvent être effectuées, de reconstruire la scène sur une grande étendue spatiale (pouvant aller jusqu'à 180° x 360°) et angulaire et en temps réel, sans contraintes sur la trajectoire, sur une scène quelconque (sans hypothèses de scène plane et sans l'aide de modèle de scène préalable par exemple).

La solution proposée :
- permet d'apporter une solution compacte au problème de reconstruction 3D et/ou de mosaïquage de la scène en ne nécessitant qu'un seul système panoramique, alors que ceux de l'état de la technique nécessitent plusieurs capteurs indépendants et sont plus complexes à mettre en oeuvre,
- produit une mosaïque de la scène,
   ∘ conforme c'est-à-dire sans déformations géométriques et donc superposables à une carte,
   ∘ sur une très large étendue spatiale et angulaire, et sans trous,
   ∘ complète c'est-à-dire pouvant se faire suivant des plans de différentes directions ce qui est très différent des procédés classiques ne produisant qu'un seul plan de reconstruction en sortie, et ne permettant pas de restituer ou restituant mal des objets de la scène ayant des faces différentes du plan de restitution choisi,
   ∘ robuste grâce aux redondances temporelles mises en oeuvre,
   ∘ précise grâce à la stéréovision temporelle qui à elle seule produit une base stéréoscopique virtuelle de grande dimension, ce qui explique la précision,
   ∘ instantanée, en ce sens qu'à chaque instant est recalculée et mise à jour la restitution panoramique 3D et la mosaïque associée,
   ∘ compatible par exemple de centrales d'attitude MEMS bas de gamme lorsque celles-ci sont utilisées pour connaître la trajectoire, ou de moyens simples de mesures de déplacements relatifs comme un odomètre ou un GPS basique,
   ∘ compatible de mouvements amples ou non coordonnés du capteur, ce que ne permet pas un capteur faible champ,
   ∘ et s'appliquant à tout type de trajectoire y compris curviligne et dans une direction quelconque.

D'autres avantages peuvent être cités, comme :
- permettre à l'opérateur de choisir des plans de reconstruction quelconques (par exemple pour reproduire à la fois ce qui est au sol et sur les façades, ou suivant une projection cylindrique). La solution est aussi adaptée à la reproduction d'objets concaves, ce qui est très difficile à réaliser par d'autres méthodes,
- produire des reconstructions texturées sur lesquelles des mesures précises sont possibles (les images reproduites sont conformes),
- permettre des mouvements quelconques du système panoramique dans la scène y compris le rapprochement,
- ne nécessiter aucune mesure externe autre que celles mesurant le déplacement relatif en position et attitude entre 2 prises d'images, avec une précision de mesure compatible d'instruments COTS bas de gamme (centrale MEMS, GPS basique ou odomètre).
- ne nécessiter aucune autre information a priori sur la scène à reconstruire,
- permettre une exploitation en temps réel sur un PC.

D'autres caractéristiques et avantages de l'invention apparaîtront à la lecture de la description détaillée qui suit, faite à titre d'exemple non limitatif et en référence aux dessins annexés dans lesquels :
la figure 1 représente schématiquement un exemple d'équipement pour la mise en oeuvre du procédé de reconstruction 3D et de mosaïquage selon l'invention,
la figure 2 représente schématiquement différentes étapes du procédé de reconstruction 3D,
la figure 3 représente schématiquement différentes étapes du procédé de mosaïquage selon l'invention,
la figure 4 illustre des ambigüités de mesure produites par un objet concave lorsqu'on n'a qu'un seul plan de reconstruction,
la figure 5 représente un exemple de décomposition sectorielle d'une image panoramique résultant d'un système panoramique,
la figure 6 représente des exemples d'images rectifiées de secteurs de l'image panoramique de la figure 5 projetées sur différents plans de rectification,
la figure 7 représente schématiquement, pour un exemple de trajectoire, des exemples de plans de rectification, des lignes de visée du système panoramique Ldv1 et Ldv2 étant indépendantes de ces plans,
la figure 8 représente schématiquement, un exemple d'évolution temporelle de plans de rectification et de plans de reconstruction 3D, pour une trajectoire donnée.

L'idée générale de l'invention consiste à exploiter au maximum le champ angulaire frontal (=dont la direction de ligne de visée parcourt un plan dans la direction du mouvement du système panoramique) et transversal (=dont la direction de ligne de visée parcourt un plan dans la direction perpendiculaire au mouvement du système panoramique) d'un système panoramique se déplaçant dans une scène selon une trajectoire connue, pour restituer suivant différents points de vue, le relief et éventuellement la texture de cette scène.

L'exploitation du champ transversal se fait en reconstruisant le relief et éventuellement la texture suivant tous les points de vue latéraux vus par le système panoramique que l'on peut présenter à l'opérateur suivant différents plans de reconstruction.

L'exploitation du champ frontal se fait en exploitant la fusion temporelle des reconstructions précédentes observant les objets de la scène suivant des points de vue différents. Ces différentes reconstructions d'un objet vu suivant différents points de vue permettent de produire une vue globale étendue, précise et conforme de la scène qui peut être présentée à un opérateur suivant différents points de vue.

Exploiter la stéréoscopie temporelle dans différentes directions angulaires que peut produire le déplacement du système optique (ou optronique) panoramique se déplaçant dans une scène, permet de produire simultanément une reconstruction 3D de la scène projetable suivant différentes directions et éventuellement une mosaïque conforme et multi faces de celle-ci.

La solution proposée utilise les nouveaux concepts suivants :
- stéréoscopie temporelle avec système panoramique, qui se différencie de la stéréoscopie classique utilisant deux caméras faible champ,
- rectification simultanée suivant différents plans dont les directions sont librement choisies, qui se différencie de la rectification classique qui ne se fait que sur un seul plan dont la direction est imposée par la direction de ligne de visée des deux capteurs utilisés. Une autre innovation est la rectification directe qui se fait directement entre n'importe quelle partie de l'image 2D du système panoramique et le plan de rectification choisi, contrairement à la rectification classique utilisée en stéréovision qui impose un plan de redressement intermédiaire, ce qui produit des pertes d'informations,
- fusion de reconstructions intermédiaires exploitant des directions de ligne de visée très différentes, permettant de gagner en précision et robustesse,
- carte de confiance liée à la hiérarchisation de la qualité des informations extraites des images 2D visant un objet de la scène sur des points de vue très différents et qui est directement liée à l'exploitation temporelle des images 2D d'un système panoramique en mouvement.

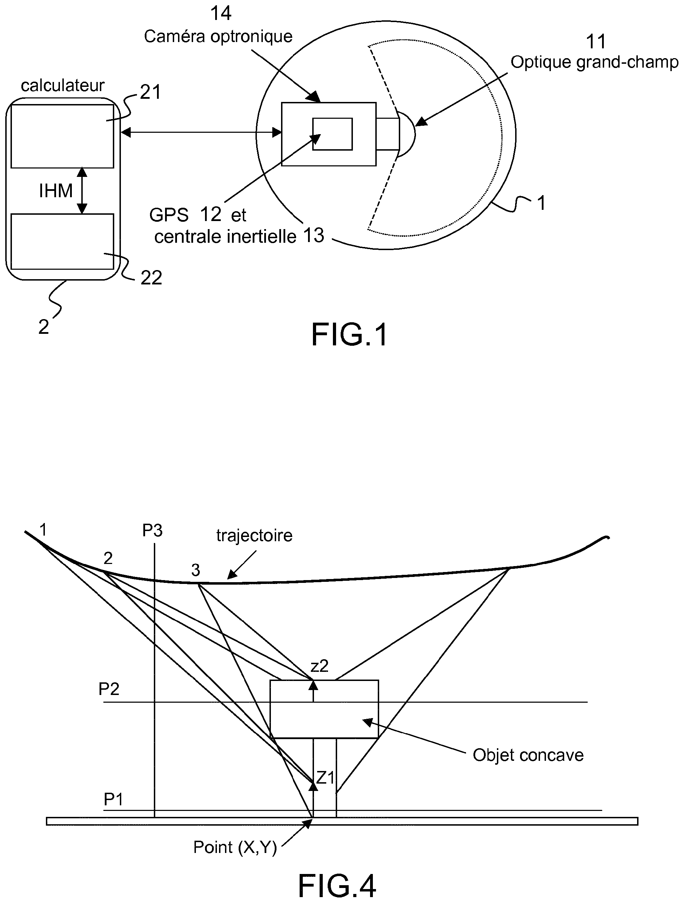

Plus précisément, le procédé est mis en oeuvre au moyen d'un équipement dont un exemple est montré figure 1, qui comprend :
- un système panoramique 1 apte à former des images panoramiques 2D de la scène, comportant un capteur 14 associé à une optique 11 et muni de moyens de localisation tels qu'un GPS 12 et une centrale inertielle 13, et,
- relié à ce système panoramique, un calculateur 2 comportant :
   ∘ des moyens 21 de mise en oeuvre du procédé de mosaïquage 3D tel que décrit, et
   ∘ des moyens de traitement automatiques d'images complémentaires éventuellement associés à, ou remplacés par une interface homme-machine 22.

Selon l'invention les images 2D sont issues du système panoramique 1 en déplacement selon une trajectoire connue, celle-ci pouvant être mesurée en relatif d'image à image au fur et à mesure du déplacement, grâce aux moyens de localisation et au calculateur 2.

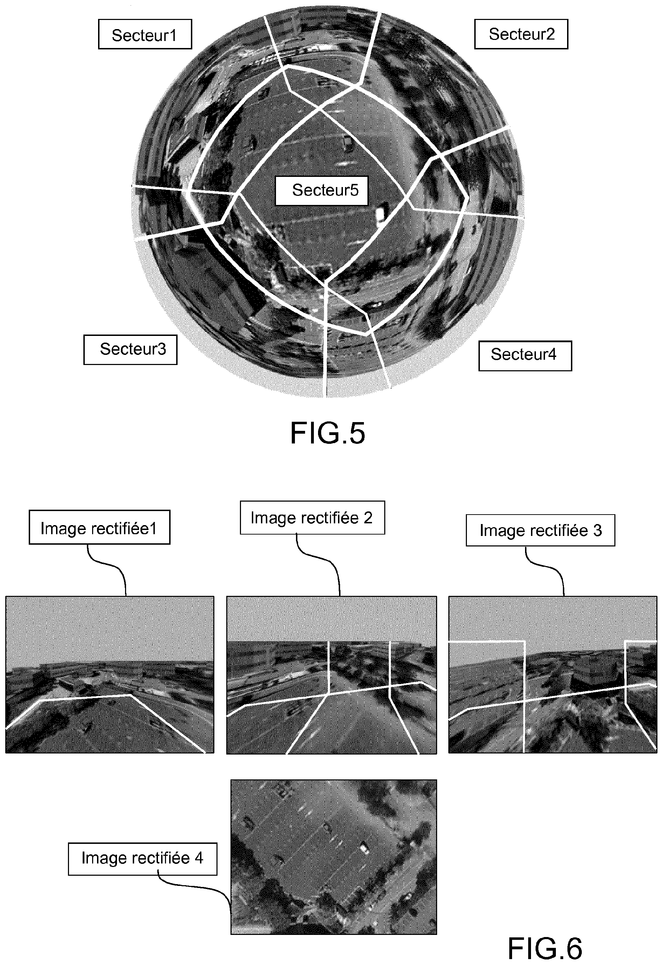

Le système est panoramique en ce sens qu'il permet d'obtenir une image panoramique 2D. A cet effet, il peut comporter une optique 11 grand champ de type fish-eye, ou tout moyen optique classique ou catadioptrique grand champ apte à fournir une image panoramique 2D, ou encore à partir d'une optique plus faible champ mais animée de mouvements plus ou moins amples pour capter les différentes portions de scènes que l'on veut reconstruire dans leur intégralité. Une image 2D couvrant un grand champ supérieur à 60° est par exemple obtenue à partir d'un système 1 à champ de 45° animé d'un mouvement lui permettant de couvrir ce champ total de 60°. Le choix de la technologie du système panoramique 1 n'est pas limité : il peut être passif mais l'on peut généraliser à un système actif du moment que celui-ci permette de mettre en oeuvre l'étape de fusion multi-plans présentée ci-dessus ; cela inclut aussi les optiques hyper-grand champ dépassant 360°x180° ou les optiques à sphère complète (par exemple 2 capteurs à optique fisheye tête-bêche explorant la sphère complète d'observabilité). Ce système panoramique peut aussi comporter un ensemble de capteurs optiques non indépendants l'un de l'autre, couvrant ensemble une couverture angulaire panoramique déterminée, par exemple identique d'une image à l'autre, ou maximale. L'ensemble de ces capteurs optiques peut ne pas être recouvrant, c'est-à-dire que l'image globale obtenue à un instant par cet ensemble n'est pas continue (peut comporter des trous), les « trous » étant comblés lors du déplacement de cet ensemble. Un exemple d'image panoramique 2D obtenue avec une optique de type fish-eye, et de secteurs (5 dans cet exemple) est montré figure 5.

La trajectoire peut être calculée au fur et à mesure du déplacement du système panoramique par des moyens de localisation mesurant les déplacements relatifs de position et d'attitude du système panoramique dans la scène tels que GPS 12, centrale inertielle 13 ou autre. Ce déplacement peut être commandé par un opérateur via une interface homme-machine 22 ou être autonome. Les images ainsi obtenues sont telles que l'image d'au moins un point de la scène est dans au moins 3 images panoramiques respectivement obtenues selon différentes directions système panoramique-point de la scène.

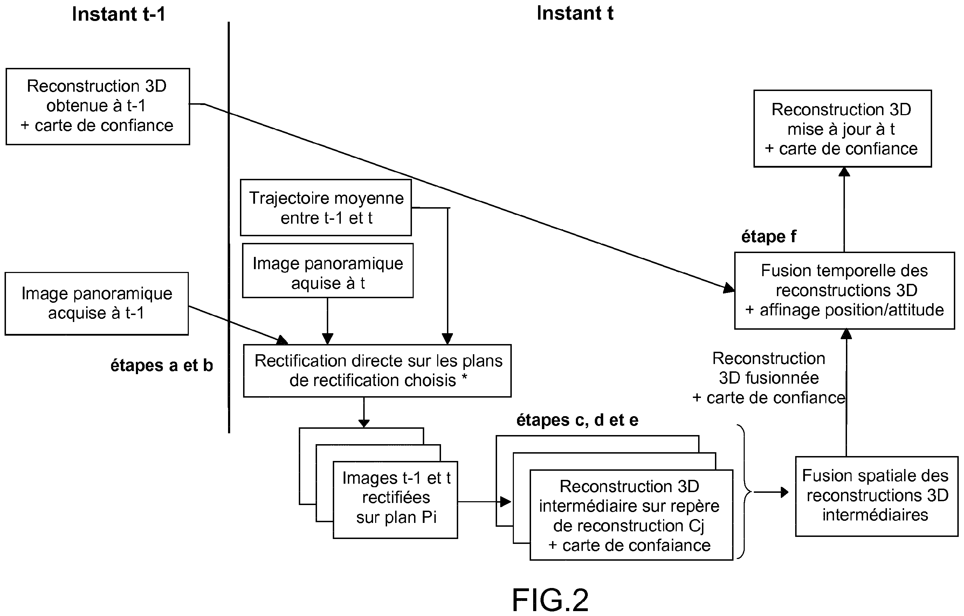

L'étape de traitement de ces images panoramiques 2D respectivement obtenues à des instants successifs, par l'unité de traitement 21 comporte les sous-étapes suivantes décrites en relation avec la figure 2 ; il s'agit de sous-étapes d'un exemple de procédé de reconstruction 3D d'une scène au moyen d'images panoramiques 2D de la scène, précédant le procédé de mosaïquage.

Les images panoramiques 2D sont issues d'un système panoramique en déplacement selon une trajectoire déterminée, tel que l'image d'au moins un point de la scène est dans au moins 3 images panoramiques 2D successives et obtenues selon différentes directions système panoramique-point de la scène ; l'étape de traitement de ces images panoramiques successives 2D respectivement obtenues à des instants successifs, comporte les sous-étapes suivantes :
a) déterminer des plans de reconstruction dans la scène à reconstruire,
b) à partir de couples d'images panoramiques respectivement formés d'une image panoramique 2D obtenue à un instant t et d'une autre image panoramique 2D obtenue à un instant t+Δt, déterminer, pour chaque couple d'images choisi, des plans de rectification correspondant aux différents plans de reconstruction choisis et projeter sur chacun d'eux un secteur d'une image panoramique 2D du couple, de façon directe c'est-à-dire sans passer par un ou plusieurs plans intermédiaires dépendant de la ligne de visée du système panoramique, pour obtenir une image rectifiée 2D, et projeter sur ces mêmes plan de rectification et de façon directe un secteur de l'autre image panoramique 2D du couple pour obtenir une autre image rectifiée 2D,
c) mettre en correspondance, pour chaque plan de rectification choisi, les deux images rectifiées 2D pour obtenir une reconstruction 3D intermédiaire dans un repère 3D lié au plan de rectification, dit repère 3D intermédiaire,
d) transformer chaque reconstruction 3D intermédiaire dans un repère 3D incluant les plans de reconstruction choisis en a) dit repère 3D de reconstruction, pour obtenir une reconstruction 3D intermédiaire transformée,
e) réitérer au moins une fois les étapes b) à d) à partir d'un nouveau couple d'images panoramiques 2D et d'au moins un autre plan de rectification, pour obtenir au moins une autre reconstruction 3D intermédiaire transformée dans ce repère 3D de reconstruction,
f) fusionner temporellement pour chaque plan de construction choisi, au moins deux reconstructions 3D intermédiaires transformées pour obtenir une reconstruction 3D de la scène,
g) les étapes b) à f) sont réalisées pour chaque plan de reconstruction choisi à l'étape a), avec les mêmes images panoramiques mais avec des secteurs différents, pour ainsi obtenir autant de reconstructions 3D que de plans de reconstruction choisis.

On va détailler ces étapes a) à g).

Etape a) Déterminer des plans de reconstruction dans la scène.

Différents plans de reconstruction Cj peuvent être choisis pour établir les reconstructions 3D en mettant en avant différents aspects de la scène, par exemple pour couvrir la scène sur une large étendue spatiale et angulaire, ou qui permettront d'avoir une meilleure représentation de celle-ci. Ils sont choisis librement par l'opérateur ou peuvent être déterminés automatiquement en fonction de la trajectoire du système panoramique, typiquement autour de la moyenne de cette trajectoire calculée entre deux prises de vue, et en fonction de la complexité de la scène.

En l'absence totale d'une reconstruction 3D initiale et en phase d'initialisation (= 1^{ère} itération), par défaut, les plans de reconstruction choisis peuvent être par exemple les 3 ou 4 plans tangents à un cylindre qui entourerait la trajectoire moyenne du système, de manière à assurer une reconstruction dans les différentes directions visibles par le système panoramique. Par exemple pour une trajectoire horizontale située à 100 m du sol, on pourrait choisir les plans de reconstruction suivants : le plan du sol, un plan perpendiculaire au sol et tangent d'un côté au cylindre entourant la trajectoire, un plan perpendiculaire au sol et tangent de l'autre côté du cylindre, un plan parallèle au sol situé à une hauteur supérieure à 100m. Une fois qu'une reconstruction 3D initiale commence à être construite, ces plans de reconstruction définis précédemment peuvent être mis à jour de manière à s'approcher ou se confondre avec les surfaces planes de la reconstruction en cours, extractibles automatiquement ou expérimentalement par un opérateur. Quand un seul plan de reconstruction ne suffit pas à donner une représentation 3D suffisante de la scène, plusieurs plans parallèles ou perpendiculaires sont utilisés pour restituer l'unicité et la complétude de la représentation 3D. C'est le cas par exemple lorsque la scène comporte un objet concave, ou dans le cas où un seul plan de reconstruction fournit différentes mesures de cotes 3D dépendant de l'angle suivant lequel se fait la mesure, et est par conséquent incapable de fournir une mesure unique, comme illustré en figure 4. Cette figure illustre l'ambiguïté de reconstruction en Z du point (X,Y) : les acquisitions aux positions 1 et 2 de la trajectoire reconstruisent z1 sur le plan de reconstruction P1, mais les acquisitions aux positions 2 et 3 de la trajectoire reconstruisent z2 sur le même plan de projection P1. On choisit alors un nouveau plan de reconstruction P2 pour lever l'ambiguïté car on aura z1 pour P1 et z2 pour P2. On choisit également un plan P3 pour trouver les limites latérales de l'objet concave.

Au fur et à mesure du déplacement du système panoramique, quand de nouveaux plans se dévoilent ou disparaissent dans la scène, il peut s'avérer aussi nécessaire de renouveler les plans de reconstructions choisis.

Etape b) : Un concept de rectification généralisée est introduit pour pouvoir rectifier deux images panoramiques 2D successives suivant une direction quelconque. Ces deux images panoramiques sont respectivement acquises à un instant t et instant t + Δt et forment un couple d'images panoramiques.

Cette rectification consiste à calculer au moins un plan de projection le plus adapté à la rectification et à appliquer la transformation qui transforme n'importe quel secteur de chacune des deux images panoramiques 2D sur chaque plan.

Chaque plan de projection servant à la rectification, dit plan de rectification, peut être choisi librement par l'opérateur parmi un choix infini de positions et d'orientations toutes parallèles à la trajectoire du système panoramique ; le plan ou chacun d'eux est indépendant de l'évolution de la ligne de visée du système panoramique (qui peut pivoter sur lui-même au cours de son déplacement le long de sa trajectoire), contrairement à la stéréoscopie classique où le plan de rectification choisi dépend de l'évolution de la ligne de visée et où les choix de plans de rectification sont très limités.

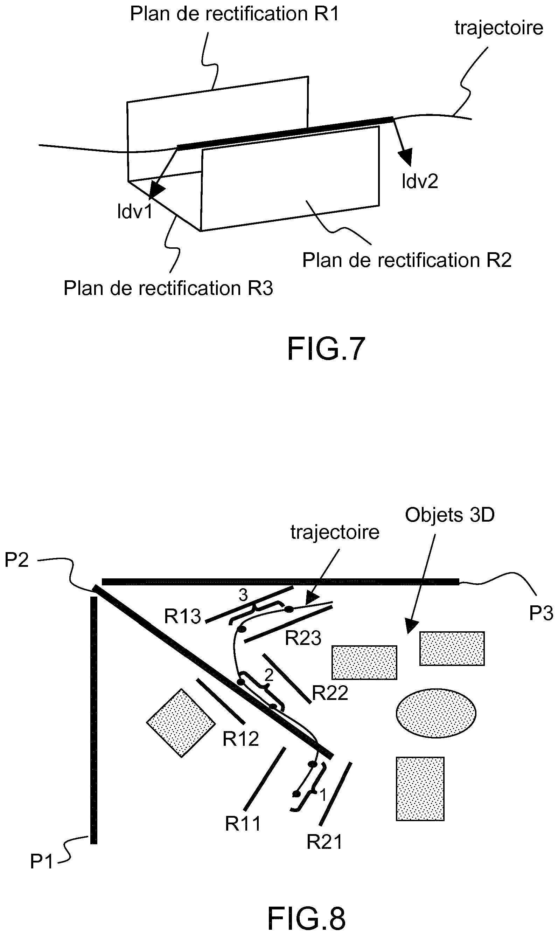

Un exemple de plans de rectification référencés R1, R2, R3 est montré figure 7 ; ils sont parallèles à la trajectoire. Est également indiquée la direction de la LdV (LdV1, LdV2) du capteur panoramique en deux points de la trajectoire, qui illustre le fait que le choix de ces plans est indépendant de la LdV.

Des exemples de plans de rectification et de reconstruction sont montrés figure 8 qui est une vue de dessus d'une scène comportant des objets 3D. Sur la trajectoire sont indiqués des couples de position (1, 2, 3) du capteur panoramique correspondant à 3 couples d'images panoramiques acquises lors de cette étape b) ; à chaque couple de position sont associés deux plans de rectification (R11, R21 pour le couple 1, R12, R22 pour le couple 2 et R13, R23 pour le couple 3). Trois plans de reconstruction P1, P2, P3 ont été choisis dans l'exemple de cette figure.

Afin d'optimiser la reconstruction 3D, chaque plan de rectification choisi correspond aux différents plans de reconstruction. Le plan de rectification est par exemple choisi de manière à être le plus proche (au sens géométrique) du plan de reconstruction déterminé à l'étape a).

La transformation qui fait passer de l'image au plan de rectification est directe c'est-à-dire n'oblige pas à passer par une étape intermédiaire de redressement dans un plan focal comme en stéréovision classique. Ceci permet d'obtenir une image rectifiée qui est :
- indépendante du mouvement de rotation du capteur et
- sans trous contrairement à ce qu'on peut trouver dans la rectification classique,
- plus précise car obtenue par un calcul direct en flottant sans image quantifiée intermédiaire.

Les étapes mathématiques de cette rectification pour une image panoramique obtenue à l'instant t, sont dans le cas d'un capteur de type fish-eye, les suivantes :
Choix d'un plan de rectification Pᵢ, d'un repère (*X̅ᵢ*, *Y̅ᵢ*, *Z̅ᵢ*)associé à ce plan Pᵢ, et d'un secteur de l'image panoramique (pouvant aller jusqu'à l'image panoramique complète si le champ de celle-ci est inclus dans la zone choisie sur le plan de rectification) à projeter sur ce plan de rectification, ce secteur permettant avantageusement de couvrir au maximum le plan de rectification. Si le secteur de l'image projeté ne couvre pas toute l'image panoramique, les secteurs restant dans l'image sont projetés dans d'autres plans de rectification, comme dans l'exemple de la figure 6 où le secteur 1 est projeté sur un plan de rectification horizontal et ne couvre pas toute l'image pour conserver une certaine résolution ; d'autres plans de rectification verticaux sont nécessaires pour projeter les autres secteurs de l'image panoramique.

Calcul de la transformation qui transforme un point (x,y) de l'image panoramique en un point (Xᵢ, Yᵢ) du plan Pᵢ ; on se sert pour cela de la correspondance qui existe entre la direction angulaire (θ, ϕ) d'un point de la scène et de la coordonnée (x,y) du point correspondant dans l'image qui dépend du système panoramique choisi. Dans le cas d'un système panoramique rectilinéaire, on peut écrire cette relation simplement :
Si R est le rayon de la position du point (x,y) par rapport au centre optique, on a : $tgθ = \left(y - yc\right) / \left(x - xc\right)$ où (xc, yc) sont les coordonnées du centre optique $ϕ = k . R$ avec k = facteur rectilinéaire du capteur

Il suffit ensuite d'écrire l'équation du plan Pᵢ en fonction du (θ, ϕ) trouvé.

Pour un plan Pᵢ dont la normale est orientée suivant (θᵢ, ϕᵢ), avec pour cas particulier le plan focal pour θᵢ=ϕᵢ=0, on démontre que l'on a la relation suivante pour le cas particulier de la projection centrée, f étant la focale du système panoramique :

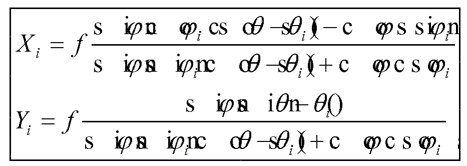

Cette transformation est un exemple de transformation dans le cas d'une optique panoramique rectilinéaire (type fisheye) ; elle ne comprend pas les paramètres de distorsion du système panoramique qui peuvent être calculés et compensés par ailleurs. La transformation peut aisément être généralisée et adaptée à tout système panoramique ayant sa formule optique propre.

Il s'ensuit que pour tout point (x,y) du secteur de l'image panoramique, on peut trouver son point rectifié correspondant dans le plan de rectification choisi et construire ainsi l'image rectifiée dans ce plan.

Les différents plans de rectification choisis au cours des itérations, et la relation précédente permettent de définir une rectification sectorielle sur les différents plans de rectification. Un secteur de l'image panoramique correspond à une portion équivalente projetée sur un plan de rectification. La décomposition sectorielle de l'image panoramique dépend des plans de rectification choisis et de l'emprise de la projection sur ces plans.

Des exemples d'images rectifiées sont montrés figure 6. La première résulte de la projection du secteur 1 de l'image de la figure 5 sur un plan de rectification vertical, la deuxième résulte de la projection du secteur 2 de l'image de la figure 5 sur un autre plan de rectification vertical, la troisième résulte de la projection du secteur 3 sur un plan de rectification vertical différent des deux premiers, la quatrième résulte de la projection du secteur 5 sur un plan de rectification horizontal.

Cette projection est réitérée dans le même plan de rectification Pᵢ pour un secteur d'une autre image panoramique 2D obtenue à l'instant t+Δt pour obtenir une autre image rectifiée, Δt étant prédéterminé expérimentalement ou déterminé de manière à ce que le déplacement Dc du système entre t et t+Δt réalise une base stéréo suffisamment grande pour être compatible de la précision souhaitée pour la reconstruction 3D. Dans le cas par exemple d'un survol à une distance moyenne H de la scène, et en supposant par exemple que des disparités minimales de 1/8 pixel (valeur courante) peuvent être mesurées par le capteur 14, le déplacement Dc pour obtenir la précision de reconstruction recherchée d_{H} est : Dc=(résol/8)*H²/d_{H}, où résol est la résolution du capteur 14 (par exemple 3mrd pour un capteur 1Mpixel muni d'un fisheye).

Dans l'exemple cité, et en supposant que la précision de reconstruction recherchée d_{H} soit 20 cm pour H=50m, Dc doit au moins être égal à 5m, ce qui correspond à une différence angulaire de 6° minimum entre 2 acquisitions par le système panoramique.

Pour la même précision d_{H} et pour H=100m, Dc doit au moins être égal à 19m, ce qui correspond à une différence angulaire de 11° minimum entre 2 acquisitions par le système panoramique.

L'utilisation d'un système panoramique permet d'augmenter la précision de reconstruction en augmentant la distance Dc et la séparation angulaire entre deux acquisitions, au-delà de ce que peut faire un capteur faible ou moyen champ pour une même couverture spatiale de reconstruction 3D. La base stéréoscopique Dc servant à la reconstruction 3D peut être plus grande que celle d'un procédé classique stéréoscopique du fait de l'utilisation d'un champ panoramique (et de la présence plus longue des objets dans ce champ), et cela permet au procédé une précision de reconstruction ultime plus grande, précision qui est aussi augmentée par la fusion des mesures qu'offre le procédé.

En prenant l'exemple précédent d'un survol à distance moyenne de 100 m de la scène (reconstruction au sol sur un champ d'au moins 120° correspondant à une bande restituée d'au moins 350 m de large sans compter la reconstruction sur les côtés), la précision de reconstruction théorique d_{H} devient 10 cm pour Dc=38m et une différence angulaire de 21°, et 2 cm pour Dc=200m et une séparation angulaire de 60° ; il faut de préférence tenir compte des incertitudes de mesures sur la localisation relative entre les points de vues pour obtenir d_{H} réel.

Si on prend le contexte d'une inspection visuelle faite par un système panoramique avec une caméra fisheye de 1Mpixel, à une distance H=20cm de la scène, et en supposant un déplacement Dc de 10 cm entre deux acquisitions, des détails de 15µm de hauteur ou de profondeur peuvent être restitués (d_{H} = 15 µm).

Afin de moyenner les différentes reconstructions 3D obtenues lors des itérations, et de bénéficier ainsi d'une réduction importante des erreurs et du bruit de restitution, l'acquisition réelle du système panoramique peut être plus rapide tout en conservant le déplacement entre les couples d'images rectifiées 2D servant à reconstruire le 3D de la scène. Le procédé consiste alors à prendre un premier couple d'images panoramiques 2D à partir d'un déplacement Dc, à faire une reconstruction 3D intermédiaire avec ce couple, puis à prendre un autre couple d'images 2D toujours à partir d'un déplacement Dc à l'acquisition suivante pour refaire une reconstruction 3D intermédiaire et ce tant que les points de la scène concernés par ces différents couples d'images restent dans le champ du système panoramique.

Etape c) : Le couple stéréoscopique d'images rectifiées dans le plan Pᵢ est exploité pour définir une reconstruction 3D intermédiaire dans un repère relatif à ce Pᵢ.

La reconstruction 3D intermédiaire dans un repère 3D lié au Pᵢ, dit repère 3D intermédiaire, est obtenue en mettant en correspondance point à point les deux images rectifiées dans Pᵢ et en s'aidant de la connaissance du mouvement du système panoramique. Cette mise en correspondance est un processus dense, qui met en correspondance, dans la mesure du possible, chacun des points d'une image 2D du couple stéréoscopique avec un point de l'autre image. Elle peut être réalisée par un processus de corrélation local plus ou moins hiérarchisé et peut s'aider de mises en correspondance réalisées à t-Δt ou t-NΔt, N étant un entier >1; la nature grand champ du système panoramique et la possibilité même de voir la même scène suivant un angle différent, ce que ne permet pas un système faible champ utilisé traditionnellement en stéréoscopie, permet ici de lever certaines occultations ou ambiguïtés.

Etape d) : transformer cette reconstruction 3D intermédiaire dans un repère 3D fixe (=absolu) incluant le (ou les) plan(s) de reconstruction déterminé(s) à l'étape a), dit repère 3D de reconstruction. On obtient ainsi une reconstruction 3D intermédiaire transformée.

Etape e) : réitérer au moins une fois les étapes b) à d) à partir d'un nouveau couple d'images panoramiques (il peut s'agir d'un nouveau couple d'images formé à partir d'images précédentes, ou ce nouveau couple résulte d'une nouvelle acquisition couplée avec une des images précédemment acquises) et d'au moins un autre plan de rectification P'ᵢ, pour obtenir au moins une autre reconstruction 3D intermédiaire transformée ; on garde le même repère 3D de reconstruction que dans l'étape d). Ces itérations peuvent être successives en ce sens que les étapes b) à d) sont successivement enchaînées dans cet ordre ; ces itérations peuvent aussi être réalisées en parallèle (plusieurs étapes b) sont réalisées en parallèle avec plusieurs plans de rectification Pᵢ déterminés en parallèle, etc).

De préférence, ces étapes b) à d) sont réitérées tant qu'au moins un point de la scène reconstruit reste dans le champ de vision du système panoramique.

Etape f) : Les reconstructions 3D intermédiaires transformées sont fusionnées temporellement par un procédé de fusion spécifique qui exploite les redondances spatiales et temporelles des reconstructions intermédiaires. Ceci est obtenu en fusionnant temporellement au moins deux reconstructions 3D intermédiaires transformées obtenues dans le repère 3D de reconstruction, pour obtenir une reconstruction 3D correspondante.

Ce procédé permet de trouver le maillage 3D dense le plus adéquat pour représenter la scène, tel qu'à chaque point de ce maillage soient associées les coordonnées du point correspondant dans un repère X,Y,Z lié à la scène.

Etape g) : réitérer les étapes b) à f) pour chaque plan de reconstruction choisi en a), avec les mêmes images panoramiques mais avec des secteurs différents, pour ainsi obtenir autant de reconstructions 3D que de plans de reconstruction choisis. Ces reconstructions 3D ou les reconstructions 3D intermédiaires obtenues au cours de ces itérations sont avantageusement fusionnées spatialement pour mettre à jour la ou les reconstructions 3D finales, et ainsi augmenter précision et robustesse de ces reconstructions. La fusion spatiale des reconstructions 3D construites suivant différents plans tient compte de la précision de reconstruction des différents éléments de chaque reconstruction qui n'est pas la même suivant les différents plans et que l'on peut prédire mathématiquement. Cette fusion spatiale est obtenue en exploitant plusieurs plans de rectification correspondant aux différents secteurs de chaque image utilisée.

L'ensemble des étapes a) à g) sont aussi de préférence, réitérées au moins une fois avec de nouveaux couples d'images panoramiques, par exemple avec des images intermédiaires temporellement décalées des précédentes, ou avec d'autres secteurs des images panoramiques déjà considérées. Cela permet d'avoir un processus continu de mise à jour des reconstructions 3D finales. Ces nouveaux couples d'images panoramiques peuvent provenir de chaque acquisition d'image panoramique mais pas nécessairement.

Là encore, ces itérations peuvent être menées successivement ou en parallèle.

L'exploitation des redondances et de la qualité des images rectifiées 2D (qualité définie par exemple par l'écart angulaire existant entre le plan de rectification et le plan de reconstruction, ou encore par un coefficient de confiance de la mise en correspondance ayant conduit à chaque reconstruction 3D intermédiaire) permet au procédé de produire une carte de confiance traduisant la qualité de la reconstruction finale. Cette carte de confiance est construite pixel par pixel pour chaque reconstruction 3D, en considérant le nombre de fois que chaque pixel a été construit et si les conditions de cette construction étaient bonnes, celles-ci étant par exemple définies en fonction d'un seuil de qualité de mise en correspondance déterminé expérimentalement ou mathématiquement. Sont aussi considérés les cas où plusieurs cotes 3D sont obtenues pour un même pixel en fonction de l'angle d'observation, auquel cas des plans de rectification et de reconstruction supplémentaires sont créés pour lever l'ambiguïté, par exemple pour des objets concaves qui demandent plus d'un plan de reconstruction pour être correctement reconstruits, comme dans l'exemple de la figure 4.

On considère à présent le mosaïquage des images 2D de la scène, la composition de ces images 2D formant une image globale appelée mosaïque. Cette mosaïque comporte généralement plusieurs plans texturés 2D présents dans la scène 3D ou qui l'approximent, mais peut aussi être sur une surface 3D.

L'exploitation de la reconstruction 3D de la scène créée progressivement permet de projeter chaque image 2D provenant de la décomposition sectorielle de l'image panoramique 2D sur différents plans (ou surfaces) de projection appelés aussi plans de mosaïquage. Ces surfaces de projection sont les surfaces sur lesquelles le mosaïquage est construit ; elles peuvent être librement choisies par l'opérateur ou peuvent être déterminées automatiquement à partir de la reconstruction 3D. Comme indiqué ci-dessus, certaines de ces surfaces peuvent être gauches (courbes) ou même être une surface 3D dont on connaît la modélisation.

Dans le cas d'un système panoramique visualisant une scène fortement 3D présentant différentes faces, plusieurs plans (ou surfaces) de mosaïquage peuvent (et ont intérêt à) être choisis. Par scène fortement 3D, on entend une scène contenant beaucoup d'éléments 3D produisant des disparités importantes entre deux acquisitions successives, comme c'est le cas par exemple d'un drone survolant un milieu urbain à faible hauteur de vol. Le procédé de mosaïquage exploite le fait que les surfaces ou plans de projection ont des orientations différentes pour projeter au mieux les textures des images sur chacune des surfaces ou plans de projection. On rappelle que la texture est un ensemble d'intensités de pixels sur une région d'image.

L'exploitation de la reconstruction 3D permet de ne conserver aussi que les parties visibles des images projetées. Ceci permet d'éviter de projeter sur un plan de mosaïquage des portions d'images qui appartiendraient à d'autres portions de la scène.

Le processus de mosaïquage multi-plans (ou multi-surfaces) de projection est réitéré de préférence à chaque nouvelle acquisition d'image 2D effectuée par le système panoramique, et la nouvelle mosaïque est fusionnée avec l'ancienne (obtenue à t-1) pour mettre à jour celle-ci.

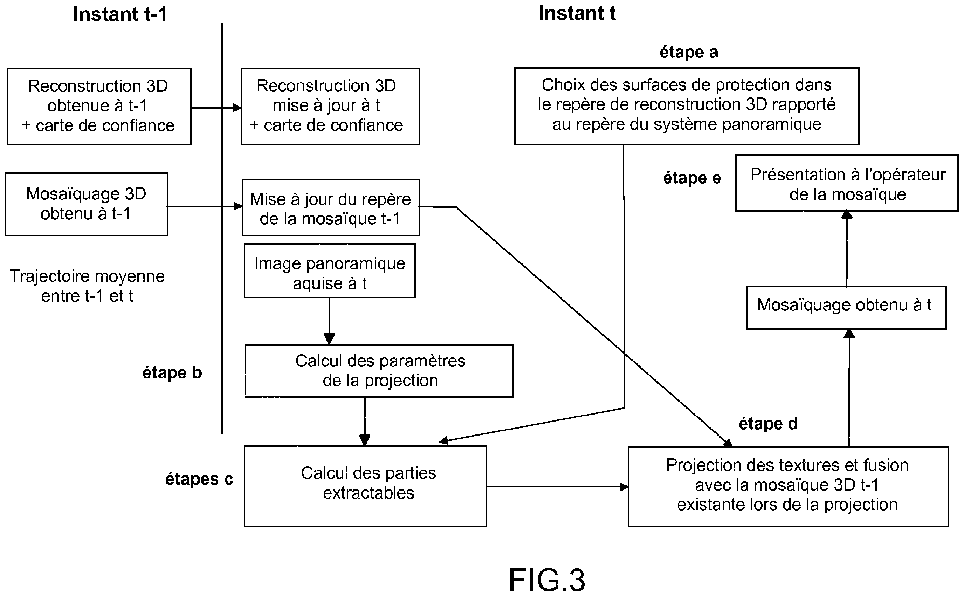

Le résultat de ces différentes projections et de la fusion continue des mosaïques est une image conforme (c'est-à-dire sans déformations géométriques) et très étendue sur chaque plan de projection. Cela résulte directement du fait que le procédé de mosaïquage 3D expliqué ci-dessous dans le détail et décrit en relation avec la figure 3, calcule simultanément la reconstruction 3D de la scène et les projections des textures sur celle-ci, que le procédé élimine les parties cachées ou les parties mal résolues dans la projection et que ce procédé est réitéré dans toutes les directions et suivant toute la trajectoire.

La reconstruction 3D de la scène et les projections des textures sur celle-ci sont calculées à chaque acquisition d'image 2D dite initiale, une acquisition étant séparée de la précédente d'un intervalle de temps Δt défini plus haut.

Selon une alternative, la reconstruction 3D de la scène et les projections des textures sur celle-ci sont calculées à chaque acquisition d'image du système panoramique et à fréquence élevée à partir d'images précédentes préalablement stockées. Plus précisément : les images intermédiaires comprises entre deux images séparées de Δt successives servant à la reconstruction 3D, sont stockées de manière à pouvoir être aussi utilisées pour la reconstruction 3D à la manière d'une FIFO acronyme de l'expression anglo-saxonne « First In First Out » (chaque nouvelle image acquise est comparée avec la première image stockée pour établir une nouvelle instance de reconstruction 3D, cette première image est ensuite effacée de la liste et la dernière rajoutée à la liste mise à jour). D'autre part les images intermédiaires peuvent aussi servir à faciliter la correspondance entre la première et dernière image, ou servir à remplir des « trous » dans le modèle 3D.

Une mosaïque est alors obtenue à l'issue des étapes suivantes A) à E) décrites en relation avec la figure 3, pour chaque nouvelle image 2D acquise par le système panoramique. Ces étapes sont de préférence réitérées à chaque nouvelle acquisition d'image panoramique 2D.

Suivant un premier mode de réalisation, la reconstruction 3D et le mosaïquage sont effectués de manière successive après chaque acquisition ; cela suppose qu'une nouvelle reconstruction 3D de référence vient d'être effectuée suite à (une ou) des reconstructions 3D déjà effectuées.

Suivant un deuxième mode de réalisation, la reconstruction 3D et le mosaïquage sont effectués en parallèle après chaque acquisition ; cela suppose que le mosaïquage est effectué alors qu'une nouvelle reconstruction 3D est toujours en cours, auquel cas la reconstruction 3D de référence est celle effectuée à une des acquisitions précédentes d'images 2D, voire une reconstruction 3D effectuée précédemment.

On va décrire plus en détail ces différentes étapes.
A) Choisir des plans (ou surfaces 3D) de projection.
   Cette première étape consiste à choisir les plans ou surfaces 3D de projection sur lesquels la mosaïque est construite. Ces plans ou surfaces 3D de projection peuvent être librement choisis par l'opérateur à un moment donné du mosaïquage ou calculés automatiquement à partir de la reconstruction 3D courante (ou de référence) de la scène suivant des critères prédéterminés (par exemple plans parallèles à la surface reconstituée du sol ou plans principaux extraits de la reconstruction 3D). Des surfaces 3D de projection peuvent aussi être utilisées si la scène s'y prête et si l'opérateur y voit un intérêt ; cela permet par exemple de représenter des objets de la scène ou un fond de scène qui ont des formes géométriques particulières, mais cela n'enlève en rien la conformité pouvant être obtenue par de multiples projections qui seraient exclusivement planes.
B) Déterminer des images rectifiées ou des secteurs associés dans l'image panoramique.
   Lorsque des images rectifiées ont été calculées lors d'une ou de plusieurs reconstructions 3D précédentes, on choisit la plus proche (au sens géométrique) du plan de projection et on calcule les paramètres de la projection directe (sans étape intermédiaire) sur le plan de projection.
   Si cette image rectifiée est trop éloignée, c'est-à-dire n'est pas proche du plan de projection par rapport à un seuil prédéterminé par l'opérateur par exemple, on acquiert une image panoramique 2D dite image panoramique 2D courante et on calcule les paramètres de la projection directe de cette image panoramique 2D courante sur le plan de projection et les secteurs de cette image courante qui seront utilisés lors de la projection directe de l'étape D.
   Dans les deux cas de figure, la projection n'est pas effectuée tout de suite mais les paramètres de projection sont mis en mémoire afin d'être utilisés par l'étape D).
C) Déterminer les parties exploitables (c'est-à-dire ayant une résolution suffisante) pour la projection de l'étape D, avec l'aide de la reconstruction 3D pour calculer les parties cachées dans le plan de projection à partir :
   - de l'image rectifiée 2D si le premier cas de l'étape B s'applique,
   - ou des secteurs de l'image panoramique courante qui seront utilisés dans la projection directe, si le deuxième cas de l'étape B s'applique.

   La reconstruction 3D venant d'être calculée permet de calculer automatiquement les parties cachées ou faiblement résolues (et inversement les parties visibles exploitables) dans le plan de projection qui résulteraient de masquages présents dans la scène. Cela revient à sélectionner les textures à conserver dans la mosaïque. Ce calcul est précis du fait que la reconstruction 3D a d'abord été construite dans le repère lié au système panoramique.
   Une des particularités du mosaïquage 3D selon l'invention est de profiter du calcul des parties cachées pour éliminer sur les différents plans de projection les masques générés par la scène et de ne considérer sur ces plans que les parties visibles. Cela permet de ne mosaïquer temporellement que des parties de scènes qui sont toujours visibles et d'éviter ainsi des déformations dues à la projection de parties de la scène n'appartenant pas au plan de projection (défaut présent dans un mosaïquage classique qui projette d'emblée toute l'image sur le plan de projection sans pouvoir tenir compte des masquages par les éléments de la scène évoluant au fur et à mesure du déplacement du capteur).
D) Projeter les textures sélectionnées à l'étape précédente sur les plans ou plus généralement sur les surfaces 3D de projection et fusionner les textures dans chaque plan ou surface 3D de projection pour ainsi obtenir une mosaïque conforme sur plusieurs plans.
   Les textures sélectionnées à l'étape précédente sont projetées sur les plans (ou surfaces) de projection, et fusionnées temporellement avec la mosaïque courante pour former une nouvelle mosaïque.
   Il est important de noter que le fait de projeter sur des surfaces ou plans issus d'une reconstruction 3D fabriquée à partir des mêmes images de base que celles servant à projeter les textures, permet une très grande précision dans la projection (et dans les transformations géométriques entre repère image et repère de la scène reconstruite). C'est aussi cela qui assure la conformité du mosaïquage produit. Mais l'élément principal de conformité résulte du fait que le mosaïquage exploite une reconstruction 3D réalisée dans le même repère que la mosaïque et n'utilise que les portions d'images non masquées dans son processus de mosaïque. Dans le cas où on utiliserait une reconstruction 3D externe qui ne serait pas issue des images de base servant à la projection, il y aurait forcément des incertitudes dans la position relative du capteur à la scène et dans le recouvrement de la projection.
E) Présenter la mosaïque à l'opérateur suivant différents plans ou plus généralement suivant différentes surfaces 3D de présentation, par projection de la (ou les) reconstruction(s) 3D texturée(s) sur ces plans de présentation. Ces plans de présentation sont librement choisis par l'opérateur et servent uniquement à présenter les résultats de la mosaïque suivant différentes perspectives choisies par celui-ci. La mosaïque peut être présentée à l'opérateur plan de présentation par plan de présentation, ou suivant les plans représentant le dépliement des surfaces courbes sur lesquels ont été projetées les textures (dans le cas d'une projection sur un cylindrepar exemple). On peut évidemment aussi présenter le résultat 3D texturé directement sous forme de 3D virtuel en utilisant un logiciel adapté. Le résultat de projection fournit une image toujours conforme, ce qui n'est pas forcément le cas, comme on l'a expliqué, avec un procédé de mosaïquage classique.

Ce procédé de reconstruction 3D et de mosaïquage simultané omnidirectionnel n'est pas limité à un système panoramique optique. On peut très bien exploiter les textures mesurées sur un grand champ directionnel par un moyen autre que optique, par exemple par un moyen actif de type lidar ou sonar ; le procédé pourrait alors aussi exploiter les distances données par les instruments.

Parmi les applications industrielles, on peut envisager :
- la restitution 3D et texturelle en temps réel d'une scène survolée par un drone ou un aéronef (application à la production de cartes 3D, d'orthophotographies, application à la surveillance,...),
- l'aide à la navigation terrestre ou aéroportée,
- l'inspection visuelle industrielle, médicale ou autre.

## Revendications

1. Procédé de mosaïquage 3D d'une scène en une mosaïque 3D, **caractérisé en ce qu'**au moins une reconstruction 3D ayant été obtenue sans information a priori sur la scène, au cours des étapes suivantes :
- Acquisition d'images successives par un capteur panoramique, en déplacement le long d'une trajectoire non contrainte de reconstruction 3D, telle que l'image d'au moins un point de la scène est dans au moins 3 images panoramiques 2D successives et obtenues selon différentes directions système panoramique-point de la scène,
- Rectification simultanée des images acquises sur différents plans de rectification et mise en correspondance des images rectifiées,
- Reconstruction 3D sur plusieurs plans de reconstruction à partir des images rectifiées mises en correspondance,
la dernière image acquise étant désignée image panoramique courante,
il comporte en outre les étapes suivantes :
A) A partir de la reconstruction 3D obtenue et de l'image panoramique courante, choix de plusieurs surfaces de projection sur lesquelles la mosaïque sera construite,
B) Sélection de secteurs de l'image panoramique courante, et sélection de textures dans les secteurs sélectionnés en sélectionnant des parties visibles c'est-à-dire qui ne sont pas cachées par une surface de la scène, avec l'aide de la reconstruction 3D,
C) Projection des textures sélectionnées sur chaque surface de projection et fusion des textures dans chaque surface de projection pour ainsi obtenir une mosaïque conforme sur chaque surface de projection.

2. Procédé de mosaïquage 3D d'une scène selon la revendication précédente, **caractérisé en ce que** l'étape B comprend une étape de sélection de secteurs de l'image panoramique courante, qui correspond aux surfaces de projection choisies.

3. Procédé de mosaïquage 3D d'une scène selon l'une des revendications précédentes, **caractérisé en ce que** les étapes A à C sont réitérées à chaque nouvelle acquisition d'image panoramique.

4. Procédé de mosaïquage 3D d'une scène selon l'une des revendications précédentes, **caractérisé en ce que** le choix des surfaces de projection est fait dans toutes les directions telles que chaque surface de projection soit la plus proche possible des plans de reconstruction 3D, au sens géométrique.

5. Procédé de mosaïquage 3D d'une scène selon l'une des revendications précédentes, **caractérisé en ce que** chaque texture présentant une résolution, il comporte une étape pour déterminer la résolution des textures et **en ce que** la fusion des textures de l'étape C) est réalisée en fonction de ces résolutions.

6. Procédé de mosaïquage 3D d'une scène selon l'une des revendications précédentes, **caractérisé en ce que** les textures sont directement projetées sur les surfaces de projection.

7. Procédé de mosaïquage 3D d'une scène selon l'une des revendications précédentes, **caractérisé en ce que** les plans de rectification sont choisis dans des directions telles que les plans de rectification couvrent l'image panoramique courante.

8. Procédé de mosaïquage 3D d'une scène selon l'une des revendications précédentes, **caractérisé en ce que** la reconstruction 3D est obtenue à partir d'images acquises sur ladite trajectoire avant l'acquisition de l'image panoramique courante.

9. Equipement de mosaïquage 3D d'une scène, qui comprend un système panoramique (1) apte à former des images de la scène, et à se déplacer le long d'une trajectoire, muni de moyens de localisation relatifs image à image (12, 13) et, relié à ce système panoramique, un calculateur (2) comportant des moyens (21) de mise en oeuvre du procédé de mosaïquage 3D selon l'une des revendications précédentes.

## Patentansprüche

1. Verfahren zur 3D-Mosaikerstellung einer Szene als ein 3D-Mosaik, **dadurch gekennzeichnet, dass** mindestens eine 3D-Rekonstruktion ohne vorherige Informationen über die Szene im Zuge der folgenden Schritte gewonnen wurde:
- Erfassen von aufeinanderfolgenden Bildern durch einen Panoramasensor, in Verlagerung über eine nicht erzwungene 3D-Rekonstruktions-Trajektorie, in der Weise, dass das Bild mindestens eines Punkts der Szene in mindestens drei aufeinanderfolgenden 2D-Panoramabildern ist, und welche gemäß verschiedenen Panoramasystem-Punkt-Richtungen der Szene gewonnen werden,
- gleichzeitiges Berichtigen der erfassten Bilder in unterschiedlichen Berichtigungsebenen und Versetzen der berichtigten Bilder in Übereinstimmung,
- 3D-Rekonstruktion in mehreren Rekonstruktionsebenen 3D anhand berichtigter und in Übereinstimmung versetzter Bilder,
wobei das letzte erfasste Bild als das aktuelle Panoramabild bezeichnet wird,
zudem folgende Schritte beinhaltend:
A) anhand der gewonnenen 3D-Rekonstruktion und des aktuellen Panoramabildes, Auswahl mehrerer Projektionsflächen, auf welchen das Mosaik konstruiert wird,
B) Auswahl von Sektoren des aktuellen Panoramabildes, und Auswahl von Texturen in den gewählten Sektoren durch Auswahl der sichtbaren Teile, das heißt, derjenigen Teile, die nicht durch eine Fläche der Szene verdeckt sind, mit Hilfe der 3D-Rekonstruktion,
C) Projizieren der gewählten Texturen auf jede Projektionsfläche und Fusionieren der Texturen in einer jeden Projektionsfläche, um so ein konformes Mosaik auf jeder Projektionsfläche zu erzielen.

2. Verfahren zur 3D-Mosaikerstellung einer Szene nach dem vorhergehenden Anspruch, **dadurch gekennzeichnet, dass** der Schritt B einen Schritt der Auswahl von Sektoren des aktuellen Panoramabildes beinhaltet, welche den gewählten Projektionsflächen entspricht.

3. Verfahren zur 3D-Mosaikerstellung einer Szene nach einem der vorhergehenden Ansprüche, **dadurch gekennzeichnet, dass** die Schritte A bis C bei jeder neuen Erfassung eines Panoramabildes wiederholt werden.

4. Verfahren zur 3D-Mosaikerstellung einer Szene nach einem der vorhergehenden Ansprüche, **dadurch gekennzeichnet, dass** die Auswahl der Projektionsflächen in alle Richtungen erfolgt in der Weise, dass jede Projektionsfläche im geometrischen Sinne möglichst nah an den 3D-Rekonstruktionsebenen liegt.

5. Verfahren zur 3D-Mosaikerstellung einer Szene nach einem der vorhergehenden Ansprüche, **dadurch gekennzeichnet, dass**, da jede Textur eine Auflösung aufweist, es einen Schritt zur Bestimmung der Auflösung der Texturen beinhaltet, und dass die Fusion der Texturen im Schritt C) anhand dieser Auflösungen erfolgt.

6. Verfahren zur 3D-Mosaikerstellung einer Szene nach einem der vorhergehenden Ansprüche, **dadurch gekennzeichnet, dass** die Texturen direkt auf die Projektionsflächen projiziert werden.

7. Verfahren zur 3D-Mosaikerstellung einer Szene nach einem der vorhergehenden Ansprüche, **dadurch gekennzeichnet, dass** die Berichtigungsebenen in solchen Richtungen gewählt werden, dass die Berichtigungsebenen das aktuelle Panoramabild abdecken.

8. Verfahren zur 3D-Mosaikerstellung einer Szene nach einem der vorhergehenden Ansprüche, **dadurch gekennzeichnet, dass** 3D-Rekonstruktion anhand von Bildern gewonnen wird, welche auf der Trajektorie vor Erfassung des aktuellen Panoramabildes erfasst werden.

9. Ausrüstung zur 3D-Mosaikerstellung einer Szene, welche ein Panoramasystem (1) beinhaltet, welches in der Lage ist, Bilder der Szene zu bilden, und sich entlang einer Trajektorie zu verlagern, ausgestattet mit relativen Bild-zu-Bild-Lokalisierungsmitteln (12, 13) und, verbunden mit diesem Panoramasystem, einen Rechner (2), der Mittel (21) zum Umsetzen des Verfahrens zur 3D-Mosaikerstellung nach einem der vorherigen Ansprüche beinhaltet.

## Claims

1. Method for 3D mosaicking of a scene into a 3D mosaic, **characterised in that** at least one 3D reconstruction having been obtained without a priori information relating to the scene, during the following steps:
- acquisition of successive images using a panoramic sensor, moving on an unconstrained 3D reconstruction trajectory, such that the image of at least one point of the scene is in at least three successive 2D panoramic images obtained in different panoramic system-point of the scene directions,
- simultaneous rectification of the images acquired in different rectification planes and placing the rectified images in correspondence,
- 3D reconstruction over a plurality of reconstruction planes based on the rectified images which are placed in correspondence,
the last image acquired being designated the current panoramic image,
it further comprises the following steps:
A) based on the 3D reconstruction obtained and the current panoramic image, selection of a plurality of surfaces for projection on which the mosaic will be constructed,
B) selection of sectors of the current panoramic image, and selection of textures in the selected sectors by selecting visible portions, that is to say, which are not hidden by a surface of the scene, by means of the 3D reconstruction,
C) projection of the selected textures onto each projection surface and merging of the textures in each projection surface in order to thus obtain a compatible mosaic on each projection surface.

2. Method for 3D mosaicking of a scene according to the preceding claim, **characterised in that** the step B comprises a step of selecting sectors of the current panoramic image, which corresponds to the projection surfaces selected.

3. Method for 3D mosaicking of a scene according to any one of the preceding claims, **characterised in that** the steps A to C are reiterated with each new acquisition of a panoramic image.

4. Method for 3D mosaicking of a scene according to either of the preceding claims, **characterised in that** the selection of the projection surfaces is carried out in all directions so that each projection surface is as close as possible to the 3D reconstruction planes, in the geometric sense.

5. Method for 3D mosaicking of a scene according to any one of the preceding claims, **characterised in that**, each texture having a resolution, it comprises a step of determining the resolution of the textures and **in that** the merging of the textures of step c) is carried out in accordance with these resolutions.

6. Method for 3D mosaicking of a scene according to any one of the preceding claims, **characterised in that** the textures are directly projected onto the projection surfaces.

7. Method for 3D mosaicking of a scene according to any one of the preceding claims, **characterised in that** the rectification planes are selected in directions such that the rectification planes cover the current panoramic image.

8. Method for 3D mosaicking of a scene according to any one of the preceding claims, **characterised in that** the 3D reconstruction is obtained based on images acquired on the trajectory before the acquisition of the current panoramic image.

9. Equipment for 3D mosaicking of a scene, which comprises a panoramic system (1) which is capable of forming images of the scene and moving along a trajectory, provided with means (12, 13) for relative image to image location and, in a state connected to this panoramic system, a processor (2) comprising means (21) for implementing the method for 3D mosaicking according to any one of the preceding claims.
